# EUROPÄISCHE PATENTANMELDUNG

(11) **EP 3 056 416 A1**
(43) Veröffentlichungstag der Anmeldung: **17.08.2016**
(21) Anmeldenummer: 16405002.3
(22) Anmeldetag: 08.02.2016
(51) Int. Cl.: B62J 17/06

(54) **SCHUTZVORRICHTUNG GEGEN WASSER VON VORNE UND UNTEN FÜR EIN FAHRRAD**

(30) Priorität: 10.02.2015 CH 1732015
(71) Anmelder: Meyer, David, 6317 Oberwil b. Zug (CH)
(72) Erfinder: Meyer, David, 6317 Oberwil b. Zug (CH)

(57) **Zusammenfassung**

Schutzvorrichtung gegen Wasser von vorne und Spritzwasser von unten für ein Fahrrad. Das Fahrrad hat einen Lenker aufzuweisen, welcher verbunden ist mit einer Gabel des Vorderrades, welches 2 Gabelrohre aufweist. Erfindungsgemäss ist eine Montagevorrichtung mit dem Lenker und eine Montagevorrichtung mit der Vorderradgabel des Fahrrads vorgesehen, welche mit einem einteiligen oder zweiteiligen Schutzschild derart verbunden ist, dass die Schutzvorrichtung stabil gehalten ist und rasch sowie einfach an-und abmontiert werden kann. Die Form der Schutzvorrichtung ist derart ausgebildet, dass der Fahrer beim auf- und absteigen vom Fahrrad keine Elemente der Schutzvorrichtung an- oder auszuziehen hat und dass er während des Fahrens keine Bewegungseinschränkungen im Pedalbereich hat.

## Beschreibung

Die Erfindung betrifft eine Schutzvorrichtung für ein Fahrrad, mittels welcher der Fahrer gegen Einwirkung von Wasser von vorne und Spritzwasser von unten geschützt wird.

Eine Schutzvorrichtung bzw. eine windabweisende Verkleidung für Fahrräder ist aus der Patentschrift US 4,655,497 bekannt. Bei dieser Vorrichtung ist die Verkleidung an der Lenkstange eines Fahrrads derart befestigt, dass ein Teil des Vorderrades mit abgedeckt ist. Der Fahrer ist während der Fahrt hinter der Verkleidung gegen Windeinwirkung sowie gegen Regenfall geschützt. Hingegen gelangt seitlich sowie vom Vorderrad aufgeworfenes Spritzwasser in den Beinbereich des Fahrers. Die Beinbekleidung des Fahrers ist somit nur ungenügend geschützt, weshalb der Fahrkomfort beeinträchtigt ist. Zudem weist die Vorrichtung relativ grosse Dimensionen auf, was beim Lenken störend sein kann.

Der vorliegenden Erfindung liegt daher die Aufgabe zugrunde, eine verbesserte Schutzvorrichtung für ein Fahrrad zu schaffen.

Die erfindungsgemässe Schutzvorrichtung soll den Fahrer zuverlässig vor Regen und Spritzwasser schützen und gleichzeitig die Bedienung des Fahrrads nicht behindern. Die Schutzvorrichtung soll nur wenig Raum in Anspruch nehmen. Sie soll mit wenigen Handgriffen anzubringen und ebenso wieder entfernbar sein. Sie soll derart am Fahrrad montiert sein, sodass der Fahrer beim aufoder absteigen vom Fahrrad kein Element der Schutzvorrichtung anziehen resp. ausziehen muss.

Diese Aufgabe wird mit der in Anspruch 1 angegebenen Schutzvorrichtung sowie angegebenen Fahrrad gelöst. Vorteilhafte Ausgestaltungen der Erfindung sind in weiteren Ansprüchen angegeben.

Die Schutzvorrichtung ist für ein Fahrrad vorgesehen, das eine Lenkstange und eine Gabel des Vorderrades mit 2 Gabelrohren aufweist. Erfindungsgemäss ist eine mit dem Lenker des Fahrrads und den Gabelrohren verbindbare Montagevorrichtung vorgesehen, welche mit einem einteiligen oder zweiteiligen Schutzschild derart verbunden ist, dass dieser gekoppelt von der Lenkstange zum einen Teil quasi senkrecht abstehend vom Vorderrad als auch zum andern Teil quasi plan zum Vorderrad bis hinter das Vorderrad führt.

Der Fahrer ist somit durch einen Schutzschild zuverlässig gegen die Einwirkung Regen und Spritzwasser geschützt. Der Schutzschild wird von den Halterungen 22 am Lenker 11 und den Halterungen 23 an den Gabelrohren 12 stabil gehalten und ist derart angeordnet, dass der Fahrer bei der Bedienung der Pedalen nicht behindert wird.

Die Beine des Fahrers sind gegen die Einwirkung von Nässe und Kälte geschützt.

Das Fahrrad kann gegebenenfalls auch eine Antriebshilfe in der Form eines Elektromotors aufweisen.

In einer ersten vorzugsweisen Ausgestaltung weist der zweiteilige Schutzschild zwei Schutzschildelemente auf, die beidseits des Vorderrades gehalten und vorzugsweise durch ein Zwischenstück miteinander verbunden sind. Die Schutzschildelemente sind derart dimensioniert, dass die Beine des Fahrers genügend geschützt sind. Vorzugsweise überragen die Schutzschildelemente auch in Kurven die Fussgelenke beim Treten der Pedalen nach aussen um 5-10cm.

Die Schutzschildelemente können in verschiedenen Längen bereitgestellt werden. Vorzugsweise wird vorgesehen, dass insbesondere die Füsse, Unterschenkel und der Kniebereich des Fahrers geschützt werden. Die Schutzschildelemente können sich nach oben jedoch bis über den Lenker erstrecken, so dass die Beine vollständig und ebenso die Hände am Lenker geschützt sind.

Zwischen den beiden Schutzschildelementen wird vorzugsweise ein Zwischenstück vorgesehen, welches die verbliebene Öffnung abschliesst. Es weist vorzugsweise eine Aussparung für die vordere Fahrradbeleuchtung auf.

In einer zweiten bevorzugten Ausgestaltung wird ein einteiliger Schutzschild verwendet, der ein Mittelstück aufweist.

Die beiden Schutzschildelemente oder der einteilige Schutzschild werden vorzugsweise aus Kunststoff oder dünnem Blech geformt. Bei dieser Ausgestaltung weist die Schutzvorrichtung nur ein geringes Gewicht auf, weshalb für den Antrieb des Fahrrads kaum zusätzliche Kraft benötigt wird. Alle Elemente, wie z.B. die Schutzschildelemente 21 werden mit ästhetisch vorteilhaften Einformungen und Farben versehen.

Die Schutzschildelemente des einteiligen oder zweiteiligen Schutzschilds weisen vorzugsweise je ein erstes Schildteil und ein gegebenenfalls durch Gelenke damit verbundenes zweites Schildteil auf, welches gegen vorne gebogen oder geknickt ist.

Zum Schutz gegen Spritzwasser kann allenfalls der einteilige Schutzschild oder jedes der Schutzschildelemente des zweiteiligen Schutzschilds an der Unterseite gegebenenfalls über ein Gelenk vorzugsweise mit wenigstens einer elastischen Blende verbunden werden. Durch die Blende wird insbesondere der Fussbereich des Fahrers optimal geschützt. Kontakte mit dem Boden, die bei Kurvenfahrten oder Unebenheiten resultieren können, sind nicht störend, da sich die elastische Blende unschwer deformieren kann. Alternativ zur elastischen Blende ist ein nach hinten gezogener Bodenschutz vorgesehen, welche plan-parallel zum Boden verläuft und vor Spritzwasser von unten schützt.

Damit die Schutzvorrichtung unabhängig von der spezifischen Ausgestaltung des Fahrradrahmens optimal montiert werden kann, ist die Montagevorrichtung vorzugsweise derart justierbar, dass der Abstand des Schutzschilds vom Vorderrad und/oder die Neigung des Schutzschilds wahlweise einstellbar sind. Auf diese Weise kann sichergestellt werden, dass einerseits die Kniefreiheit für den Fahrer und andererseits die erforderliche Freiheit für die Auslenkung des Vorderrades gegeben sind. Die Schutzvorrichtung kann daher bei jedem Fahrrad optimal installiert werden.

Die Montagevorrichtungen werden dazu vorzugsweise mit starren Verlängerungen oder Leisten ausgestattet. Indem die Unterseite des Schutzschildes durch Justierung der Montagevorrichtung vor oder zurück verschoben wird, kann nicht nur den Abstand des Schutzschildes vom Vorderrad, sondern auch die Neigung des Schutzschildes eingestellt werden.

Für bestimmte Kategorien von Fahrrädern können ferner angepasste Schutzschilder und angepasste Montagevorrichtungen vorgesehen werden. Ferner können Schutzschilder in verschiedenen Dimensionen angeboten werden, so dass der Fahrradfahrer ein Schutzschild wählen kann, welches ihm den gewünschten Schutz gewährt.

Nachfolgend wird die Erfindung anhand von Zeichnungen näher erläutert. Dabei zeigt:

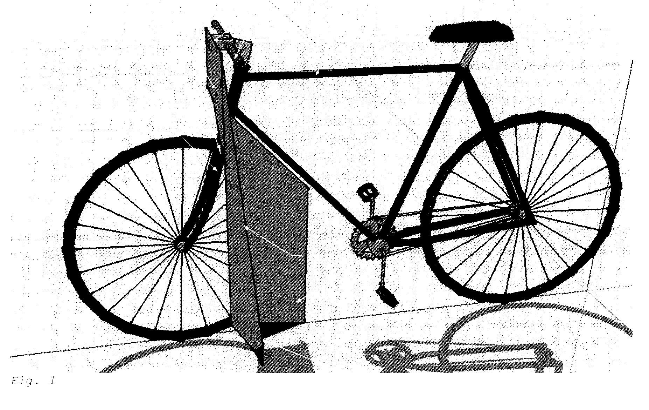

Fig. 1 Symbolisch ist in Figur 1 gezeigt, dass bei der Fahrt Wasser insbesondere im Beinbereich auf den Fahrradfahrer einwirken können. Während der Oberkörper des Radfahrers durch eine Jacke üblicherweise gut geschützt ist, wird die Stoffhose bei Regen meist rasch durchnässt. Bei kalter Witterung unterkühlen sich die Beine des Radfahrers, so dass ein reduzierter Fahrkomfort und gegebenenfalls gesundheitliche Probleme resultieren. So zeigt das Fahrrad 1 von Figur 1 ausgerüstet mit einer erfindungsgemässen Schutzvorrichtung 2, die einen Schutzschild 21 umfasst, wobei hier nur das Schutzschildelement linksseitig abgebildet ist, jedoch ein spiegelsymmetrisches Schutzelement 21 rechtsseitig zugehörig ist. Das Schutzschildelement 21 ist in dieser vorzugsweisen Ausgestaltung leicht geneigt, so dass es zwar nahe an den Beinen des Radfahrers ist, jedoch der Radfahrer insbesondere im Fussbereich genügend Beinfreiheit aufweist, so dass der Radfahrer dort nicht behindert wird. Auch Wasser, insbesondere vom Vorderrad 192 aufgeworfenes Spritzwasser, wird aufgefangen und abgeleitet.

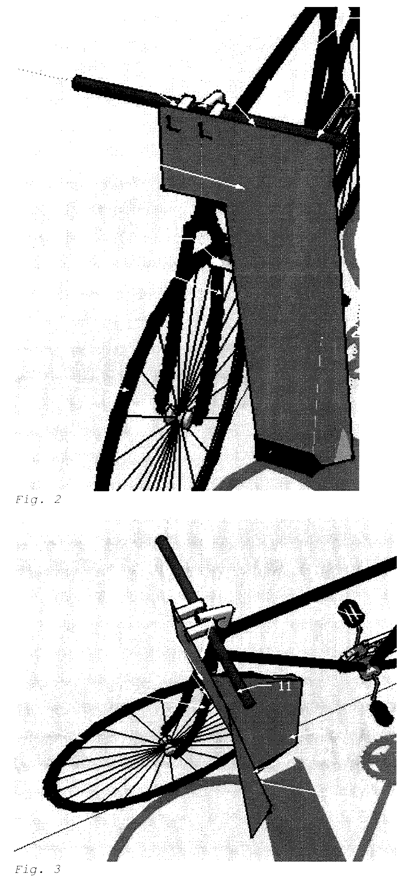

Fig. 2 Figur 2 zeigt das Schutzschildelement 21 links, das mittels einer ersten Montagevorrichtung 22 mit dem Lenker 11 und einer zweiten Montagevorrichtung 23 mit dem Gabelrohr 12 verbunden ist. Der Abstand zwischen den beiden Schutzschildelementen 21 links und rechts kann durch die justierbare Montagevorrichtung 22 und 23 bedarfsweise gewählt werden, wobei die Schutzwirkung stets aufrechterhalten wird. Dieses Konzept erlaubt es zudem, die Schutzschildelemente 21 links u. rechts weiter nach hinten zu verschieben um sie optimal auf das Fahrrad anzupassen. Die Montagevorrichtungen sind mit einem Schnellverschluss bestückt, der es erlaubt, die Schutzschildelemente 21 links und rechts einfach und schnell anzubringen oder wieder zu entfernen
Fig. 3 Symbolisch zeigt Figur 3, dass die Form des Schutzschildes 21 derart gewölbt bzw. gefaltet ist, dass die Schutzwirkung auch beim Kurvenfahren bestehen bleibt. Vorzugsweise sind die Schutzschildelemente 21 links und rechts des einteiligen oder zweiteiligen Schutzschilds 21 mittels Gelenken in den Falten 24 derart gehalten, dass sie nach Gebrauch des Fahrrads 1 ganz oder teilweise eingeklappt werden können. Für das Parkieren des Fahrrads 1 wird in dieser Ausgestaltung daher kaum zusätzlicher Raum in Anspruch genommen. Weiter zieht sich der Schutzschild plan-parallel dem Vorderrad 192 entlang nach hinten bis über das Schutzblech hinaus 25, sodass vom Rad keine Spritzer in den Pedalbereich gelangen können.

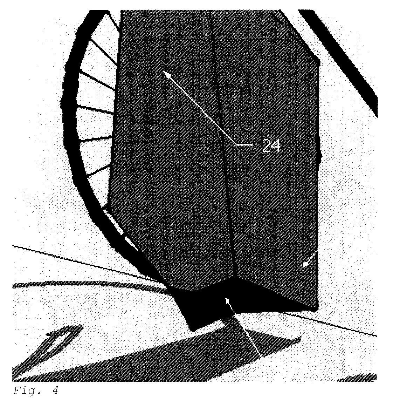

Fig. 4 Figur 4 zeigt, dass auf der Unterseite der Schutzschild 21 mit einer elastischen Blende 216 versehen ist, deren unteres Ende nur wenig vom Boden beabstandet ist. Durch diese Blende 216 wird bodennahes Spritzwasser abgewiesen, so dass der Schutz weiter optimiert wird.

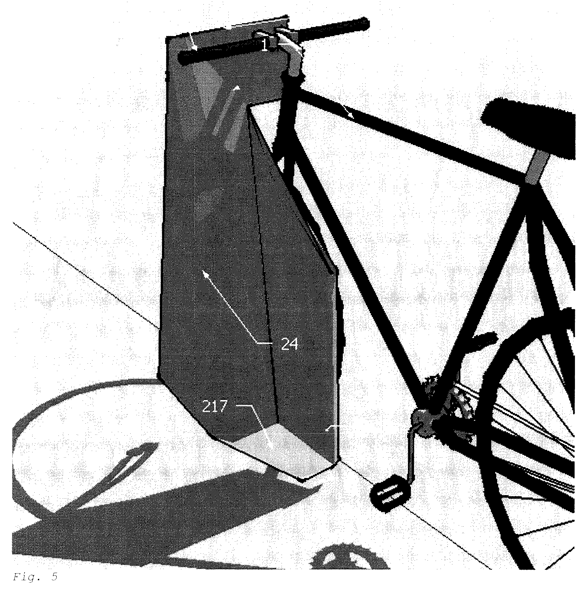

Fig. 5 Wie in Figur 5 gezeigt, ist alternativ zur elastischen Blende 216 ein nach hinten gezogener Spritzschutz 217 angebracht, welche plan-parallel zum Boden verläuft und vor Spritzwasser von unten schützt.

## Patentansprüche

1. Schutzvorrichtung (2) gegen Wasser von vorne und Spritzwasser von unten für ein Fahrrad (1), das einen Lenker aufweist welcher verbunden ist mit einer Gabel des Vorderrades die (2) Gabelrohre aufweist.

2. Schutzvorrichtung (2) nach Anspruch (1), **dadurch gekennzeichnet, dass** der einteilige wie alternativ auch der zweiteilige Schutzschild (21) zwei Schutzschildelemente (21A, 21B) aufweist, die beidseits des Vorderrades gehalten sind, vor dem Lenker parallel zu diesem beginnend, sich schräg nach unten bis knapp über den Boden ziehen und auf Höhe des Vorderrades zusätzlich jeweils einen quasi-rechtwinklig abgewinkelten Teil aufweisen, der plan-parallel zum Vorderrad verlaufend bis hinter das Vorderrad reicht, wo beide Schutzschildelemente mit einfach zu öffnenden Verbindungen miteinander verbunden sind.

3. Schutzvorrichtung (2) nach Anspruch 1, **dadurch gekennzeichnet, dass** der Schutzschild (21) ein Mittelstück (21C) aufweist, welches vorzugsweise derart geformt ist, dass es via Montagevorrichtung am Lenker befestigt werden kann um die Schutzschildteile (21A, 21B) stabil zu tragen.

4. Schutzvorrichtung (2) nach Anspruch 1, **dadurch gekennzeichnet, dass** der einteilige Schutzschild (21) oder die die beiden Schutzschildelemente (21A, 21B) des zweiteiligen Schutzschilds (21) aus Kunststoff oder aus Blech geformt sind.

5. Schutzvorrichtung (2) nach Anspruch 2, **dadurch gekennzeichnet, dass** die beiden Schutzschildelemente (21A, 21B) des einteiligen oder zweiteiligen Schutzschilds (21) im Bereich des Vorderrades (192) von einer Klappkante (24) mit Scharnier derart klappbar gehalten sind, dass die beiden Schutzschildelemente (21A, 21B) gegen das Rad oder sich selber eingeklappt bzw. ausgeklappt und vorzugsweise in beiden Positionen mittels einer Arretiervorrichtung arretiert werden können.

6. Schutzvorrichtung (2) nach einem der Ansprüche 1-5, **dadurch gekennzeichnet, dass** die Form derart ausgebildet ist, dass sie den Pedalbereich beim Geradeausfahren wie auch beim Kurvenfahren vor Wasser von vorne und unten schützt und ohne dass die Schutzvorrichtung in den Pedalbereich hineinragt.

7. Schutzvorrichtung (2) nach einem der Ansprüche 1-5, **dadurch gekennzeichnet, dass** der einteilige Schutzschild (21) oder jedes der Schutzschildelemente (21A, 21B) des zweiteiligen Schutzschilds (21) an der Unterseite gegebenenfalls über ein Gelenk mit wenigstens einer elastischen Blende (216) verbunden ist.

8. Schutzvorrichtung (2) nach einem der Ansprüche 1-6, **dadurch gekennzeichnet, dass** der einteilige Schutzschild (21) oder jedes der Schutzschildelemente (21A, 21B) des zweiteiligen Schutzschilds (21) an der Unterseite mit einem zum Boden planparallelen Blende (217) versehen ist, welche das frontale Teil des Schutzschildelementes (21) mit seinem seitlichen Teil (25) verbindet.

9. Schutzvorrichtung (2) nach einem der Ansprüche 1-6, **dadurch gekennzeichnet, dass** die Montagevorrichtungen (22, 23) derart justierbar sind, dass der Abstand des Schutzschilds (21) vom Vorderrad (192) und/oder die Neigung des Schutzschilds (21) wahlweise einstellbar sind.

10. Schutzvorrichtung (2) nach einem der Ansprüche 1-9, **dadurch gekennzeichnet, dass** die Montagevorrichtungen (22, 23) wenigstens ein mit dem. Lenker (11) resp. Gabel (12) verbindbares erstes Montageteil und wenigstens ein dazu korrespondierendes mit dem Schutzschild (21) verbindbares zweites Montageteil umfasst, wobei das erste und das zweite Montageteil schrittweise oder kontinuierlich gegeneinander verschiebbar und miteinander verbindbar sind.
